# FASCICULE DE BREVET EUROPEEN

(11) **EP 1 930 219 B1**
(45) Date de publication et mention de la délivrance du brevet: **10.02.2010**
(21) Numéro de dépôt: 07121778.0
(22) Date de dépôt: 28.11.2007
(51) Int. Cl.: B60T 13/52, G01L 5/22, B60Q 1/44, B60R 16/023

(54) **Servomoteur pneumatique d'assistance au freinage comportant un capteur d'effort**
Pneumatischer Bremskraftverstärker, der einen Kraftsensor umfasst
Pneumatic servomotor for braking assistance including a force sensor

(30) Priorité: 06.12.2006 FR 0610653
(43) Date de publication de la demande: 11.06.2008
(73) Titulaire: Robert Bosch GmbH, 70442 Stuttgart (DE)
(72) Inventeur: Bernadat, Olivier, 94170, Le Perreux (FR); Beylerian, Bruno, 95380, Lourves (FR); Nen, Yannick, 91290, Arpajon (FR); Brahmi, Omar, 75010, Paris (FR)
(74) Mandataire: Hurwic, Aleksander Wiktor

(56) Documents cités:
- EP-A1- 0 198 763
- FR-A1- 2 736 606
- FR-A1- 2 834 265

## Description

### DOMAINE TECHNIQUE DE L'INVENTION

L'invention concerne les systèmes de freinage hydraulique comportant un dispositif d'assistance au freinage. Plus précisément, l'invention se rapporte à un servomoteur pneumatique d'assistance au freinage.

L'invention s'applique notamment à l'industrie automobile, et plus particulièrement à l'industrie des systèmes de freinage pour véhicule automobile.

### ETAT DE LA TECHNIQUE ANTERIEURE

Un système de freinage hydraulique pour véhicule automobile de type connu comporte une pédale de frein, un servomoteur pneumatique d'assistance au freinage, un maître cylindre relié à un réservoir de liquide de freinage, un circuit de liquide de freinage et au moins un organe de freinage actionné par le liquide de freinage. FR 2 736 606 décrit un servomoteur pneumatique d'assistance au freinage comportant en outre une valve additionnelle. Le système de freinage hydraulique peut également comporter un bloc hydraulique.

La pédale de frein actionnée par un conducteur est mécaniquement couplée au servomoteur pneumatique d'assistance au freinage. Le servomoteur pneumatique d'assistance au freinage s'interpose entre la pédale de frein et le maître cylindre. II a pour fonction d'amplifier une force appliquée sur la pédale de frein et de la transmettre au maître cylindre. Le maître cylindre alimenté en liquide de freinage par le réservoir de liquide de freinage, pressurise le liquide de freinage dans le circuit de liquide de freinage sous l'action du servomoteur pneumatique d'assistance au freinage. Le liquide de freinage agit sur l'organe de freinage. Lorsque l'organe de freinage est du type frein à disque, le liquide de freinage arrive sous pression dans un étrier pour pousser un piston jusqu'à une plaquette de frein et venir serrer un disque de frein.

Le bloc hydraulique est un dispositif annexe comportant une pompe permettant d'injecter dans le circuit du liquide de freinage sous pression. Le bloc hydraulique peut fonctionner indépendamment d'une action sur la pédale de frein par le conducteur. Par exemple, dans des conditions de chaussée humide, il peut être actionné pour sécher les disques de frein mouillés, ce qui permet d'assurer un freinage plus efficace le moment venu. Il peut aussi agir en complément du système de freinage de type connu décrit ci-dessus pour augmenter la performance du freinage en cas d'urgence (système de freinage antiblocage ABS ou assistance de contrôle de trajectoire ESP).

En outre, pour déterminer les consignes de freinage du conducteur, nécessaire notamment au fonctionnement coordonné des dispositifs précités, le système de freinage comporte une pluralité de capteurs. Un premier exemple de capteur est un capteur d'allumage de feux stop destiné à allumer les feux stop du véhicule lors d'un appui sur la pédale de frein. Un autre exemple de capteur est un capteur de course destiné à donner une indication de l'ampleur du freinage demandé par le conducteur. Lors de la réalisation de mesure, ces capteurs coopèrent avec des pièces en mouvement, par exemple la pédale de frein.

Le système de freinage hydraulique pour véhicule automobile de type connu muni des capteurs précités est complexe. Cette complexité entraîne un coût supplémentaire de l'ensemble du système du fait du nombre des capteurs, de leurs montages lors de la fabrication d'un véhicule automobile. De plus, elle entraîne également un risque pour la fiabilité du système de freinage du fait de l'interaction des capteurs avec des pièces en mouvement.

### EXPOSE DE L'INVENTION

Un but de l'invention est de proposer un servomoteur pneumatique d'assistance au freinage permettant de résoudre au moins un des problèmes de l'état de la technique antérieur. En particulier, un but de l'invention est de proposer un servomoteur pneumatique d'assistance au freinage permettant de déterminer les consignes de freinage du conducteur de manière plus intégrée par rapport aux systèmes de l'état de la technique antérieur.

Selon l'invention, il est proposé un servomoteur pneumatique d'assistance au freinage comportant:
- une structure étanche comprenant une enveloppe rigide formant une cheminée munie d'une ouverture et une paroi mobile divisant la structure étanche en une chambre à basse pression et une chambre de travail,
- un piston pneumatique comprenant un moyeu solidaire de la paroi mobile et monté coulissant dans l'ouverture de la cheminée, un clapet logé dans le moyeu et un joint d'étanchéité positionné entre le moyeu et la cheminée,
- une tige d'entrée et une tige de sortie couplées de part et d'autre du piston pneumatique, et
- un ressort de rappel pour ramener le piston pneumatique dans une position de repos, le ressort de rappel étant disposé dans la chambre à basse pression entre une surface interne de l'enveloppe rigide et le piston pneumatique.

Le servomoteur pneumatique d'assistance au freinage comporte en outre un capteur d'effort disposé dans la chambre à basse pression et soumis aux variations de charge du ressort de rappel.

Avantageusement, le capteur d'effort est positionné dans la chambre à basse pression de façon à former une butée pour le ressort de rappel.

Selon une variante de l'invention, le capteur d'effort est positionné entre la surface interne de l'enveloppe rigide et le ressort de rappel.

Selon une autre variante de l'invention, le capteur d'effort est positionné entre le piston pneumatique et le ressort de rappel.

Selon un autre aspect de la présente invention, un connecteur électrique du capteur d'effort est fixé de manière étanche à l'enveloppe rigide.

Le connecteur électrique du capteur d'effort peut être monté serti à l'enveloppe rigide.

Selon encore un autre aspect de la présente invention, le capteur d'effort est relié au connecteur électrique du capteur d'effort par un câble électrique s'étendant dans la chambre à basse pression.

Avantageusement, le capteur d'effort peut être un capteur du type jauge de contrainte, ou un capteur à seuil.

Le servomoteur pneumatique d'assistance au freinage selon l'invention permet de déterminer les consignes de freinage du conducteur par un capteur unique. Il permet également de mesurer la course de la pédale de frein.

L'intégration de ce capteur au servomoteur pneumatique d'assistance au freinage est réalisée de manière simple et économique. La précision et la fiabilité du capteur sont également assurées par l'absence d'interaction avec une ou plusieurs pièces en mouvement.

Enfin, le capteur d'effort du servomoteur pneumatique d'assistance au freinage selon l'invention remplace avantageusement le capteur d'allumage de feux stop selon l'art antérieur.

### DESCRIPTION DES FIGURES

La présente invention est illustrée par des exemples non limitatifs sur les Figures jointes, dans lesquelles des références identiques indiquent des éléments similaires:
La Figure 1 est une vue en coupe partielle d'un servomoteur pneumatique d'assistance au freinage selon l'invention fixé à un maître cylindre tandem;
La Figure 2 est une vue de côté d'un détail du servomoteur pneumatique d'assistance au freinage de la Figure 1, le détail représentant un connecteur électrique externe.

### DESCRIPTION DETAILLEE DE L'INVENTION

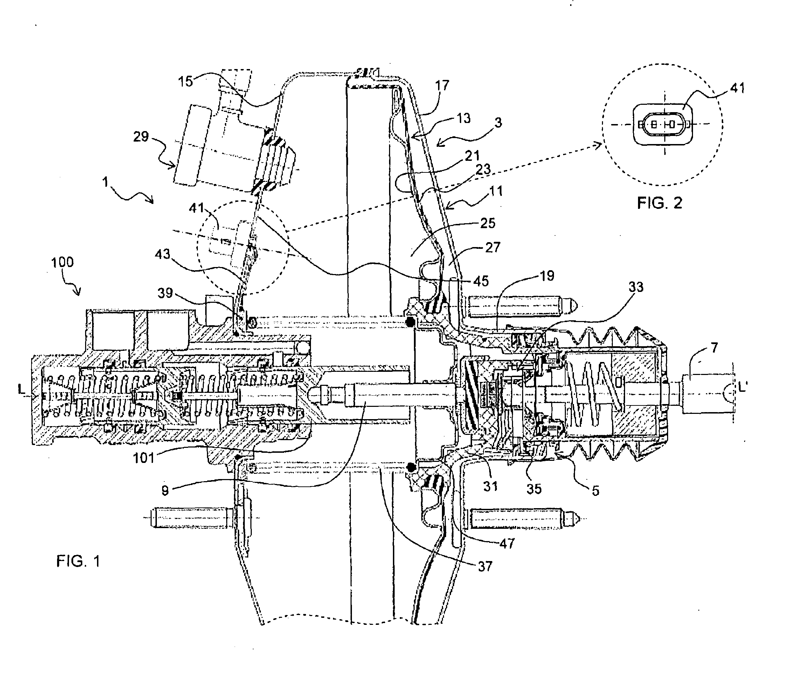

La Figure 1 est une vue en coupe représentant un servomoteur pneumatique d'assistance au freinage 1 selon l'invention. Le servomoteur pneumatique d'assistance au freinage 1 s'interpose entre un maître cylindre tandem 100 et une pédale de frein (non représenté).

Le servomoteur pneumatique d'assistance au freinage 1 comporte une structure étanche 3, un piston pneumatique 5, une tige d'entrée 7 et une tige de sortie 9 d'axe de révolution longitudinal LL', et un ressort de rappel 37.

La tige d'entrée 7 est destinée à être couplée à la pédale de frein située d'un côté du servomoteur pneumatique d'assistance au freinage 1.

La tige de sortie 9 est destinée être couplée au maître cylindre 100 d'un autre côté du servomoteur pneumatique d'assistance au freinage 1.

La structure étanche 3 comporte une enveloppe rigide 11 et une paroi mobile 13. L'enveloppe rigide 11 comprend un récipient 15 muni d'un couvercle 17 conformé en une cheminée 19 pourvue d'une ouverture. La paroi mobile 13 est constituée par une jupe 21 et une membrane 23 en caoutchouc. La paroi mobile 13 divise la structure étanche en une chambre à basse pression 25 et une chambre de travail 27. La paroi mobile 13 est apte à coulisser de manière étanche selon l'axe longitudinal LL' sous l'action d'une différence de pression entre les deux chambres 25, 27. L'enveloppe rigide 11 est munie d'un connecteur pneumatique 29 étanche relié à une zone de dépression du moteur ou à une pompe pneumatique (non représentées).

Le piston pneumatique 5 comprend un moyeu 31 et un clapet 33. Le moyeu 31 est solidaire de la paroi mobile 13 et monté coulissant dans l'ouverture de la cheminée. Un joint d'étanchéité 35 est positionné entre le moyeu 31 et la cheminée 19. Le moyeu 31 est couplé d'un côté à la tige d'entrée 7 et d'un autre côté à la tige de sortie 9. Le clapet 33 est logé dans le moyeu 31 et contrôle la communication entre la chambre à basse pression 25 et la chambre de travail 27. Le clapet 33 est actionné par la tige d'entrée 7 reliée à la pédale de frein. Avantageusement, le clapet 33 est une valve trois voies dont la structure et le fonctionnement connu ne seront pas expliqué de manière plus détaillée.

Le ressort de rappel 37 est monté en compression dans la chambre à basse pression 25. Avantageusement, le ressort de rappel 37 est linéaire et sa raideur est assez faible.

Le fonctionnement du servomoteur pneumatique d'assistance au freinage selon l'invention va maintenant être décrit.

Le servomoteur pneumatique d'assistance au freinage a pour fonction d'amplifier une force appliquée par un conducteur sur la pédale de frein pour la transmettre au maître cylindre.

Dans une position de repos, c'est-à-dire lorsque aucune force n'est exercée sur la pédale de frein, le piston pneumatique 5 met en communication la chambre à basse pression 25 avec la chambre de travail 27.

Dans une position de travail, c'est à dire lors d'un freinage, le conducteur exerce une force sur la pédale de frein ce qui a pour effet d'actionner la tige d'entrée 7. La tige d'entrée 7 actionne le clapet 33 du piston pneumatique 5 ce qui a pour effet:
- d'une part de fermer la communication entre la chambre à basse pression 25 et la chambre de travail 27, et
- d'autre part de mettre en communication la chambre de travail 27 avec l'extérieur du servomoteur pneumatique d'assistance au freinage où règne la pression atmosphérique.

Sous l'action de la différence de pression entre les deux chambres, la paroi mobile 13 et le piston pneumatique 5 se déplacent selon l'axe longitudinal LL' en direction du maître cylindre 100. Le piston pneumatique 5 actionne alors la tige de sortie 9 qui transmet une force de freinage amplifiée au piston primaire 101 du maître cylindre 100.

Le ressort de rappel 37 permet de ramener le piston pneumatique 5 et donc la paroi mobile 13 dans la position de repos pour éviter l'application d'une pression de freinage sans appui sur la pédale de frein par le conducteur.

Le servomoteur pneumatique d'assistance au freinage 1 comporte un capteur d'effort 39. Le capteur d'effort 39 est un capteur de type connu pouvant mesurer une force de 0 à 50 déca Newton. Il est disposé dans la chambre à basse pression 25 et forme une butée pour le ressort de rappel 37. Par conséquent, il est soumis aux variations de charge du ressort de rappel 37, laquelle dépend de la course de la pédale de freinage.

Selon une première variante (représentée à la Figure 1), le capteur d'effort 39 est positionné entre la surface interne 45 de l'enveloppe rigide et le ressort de rappel 37.

Selon une seconde variante (non représentée), le capteur d'effort 39 est positionné entre le piston pneumatique 5 et le ressort de rappel 37. Plus précisément, le capteur d'effort 39 est positionné entre une pièce 47 présentant une section en double U coopérant avec la tige de sortie 9 et avec une partie arrière du piston pneumatique 5.

Avantageusement, le capteur d'effort 39 peut être un capteur du type jauge de contrainte. Avantageusement, le signal de sortie du capteur d'effort 39 est proportionnel à l'effort appliqué. A titre d'alternative, le capteur d'effort 39 peut être un capteur à seuil. Avantageusement, la valeur de seuil est légèrement supérieure à la charge du ressort de rappel 37 au repos.

Le capteur d'effort 39 est relié à un connecteur électrique 41 par un câble électrique 43 s'étendant dans la chambre à basse pression 25. Le connecteur électrique 41 du capteur d'effort 39 est fixé de manière étanche à l'enveloppe rigide 11. Par exemple, le connecteur électrique 41 du capteur d'effort 39 est monté serti à l'enveloppe rigide 11.

La Figure 2 représente une vue de face de la partie du connecteur électrique 41 se trouvant à l'extérieur de l'enveloppe rigide 11. Le connecteur électrique 41 est destiné à recevoir une prise d'un câble électrique relié à un dispositif électronique de contrôle du système de freinage, par exemple un calculateur (non représentés). Le connecteur électrique 41 satisfait aux normes de connexion électrique en usage dans l'industrie automobile.

Etant donné que le ressort de rappel 37 est linéaire, sa raideur assez faible, et que la charge en place est bien déterminée, il existe une relation linéaire entre la course de la pédale de frein et l'effort appliqué sur le capteur d'effort 39. Par conséquent, le calculateur peut déterminer la valeur de la course sur la base de la mesure d'effort effectuée par le capteur d'effort 39.

Le calculateur peut également exploiter le signal provenant du capteur comme un signal indiquant un appui par le conducteur sur la pédale de frein. En conséquence, le calculateur peut commander l'allumage des feux stop.

Avantageusement, le calculateur initie une procédure d'auto-étalonnage lors du démarrage du véhicule et la mise sous dépression de la chambre à basse pression. La procédure d'auto-étalonnage permet de s'affranchir de la disparité de la raideur du ressort et de la charge en place d'un servomoteur pneumatique d'assistance au freinage à un autre suite à la fabrication. Il permet également de s'affranchir des faiblesses éventuelles de l'étanchéité de la chambre à basse pression.

### REMARQUES FINALES

Les figures et leurs descriptions faites ci-dessus illustrent l'invention plutôt qu'elles ne la limitent.

En particulier, l'invention vient d'être décrite en relation avec un exemple particulier de connecteur électrique et de fixation du connecteur électrique. Néanmoins, il est évident pour un homme du métier que l'invention peut être étendue à d'autre type de connecteur électrique et de fixation dès lors que l'étanchéité de la chambre à basse pression est assurée de manière satisfaisante.

Le positionnement de la chambre à basse pression et de la chambre de travail relativement au maître cylindre et à la pédale de frein n'est pas limitatif. En effet, les chambres pourraient être positionnées de manière inversée sans affecter le principe de l'invention.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Un servomoteur pneumatique d'assistance au freinage (1) comportant:
- une structure étanche (3) comprenant une enveloppe rigide (11) formant une cheminée (19) munie d'une ouverture et une paroi mobile (13) divisant la structure étanche (3) en une chambre à basse pression (25) et une chambre de travail (27),
- un piston pneumatique (5) comprenant un moyeu (31) solidaire de la paroi mobile (13) et monté coulissant dans l'ouverture de la cheminée, un clapet (33) logé dans le moyeu (31) et un joint d'étanchéité (35) positionné entre le moyeu (31) et la cheminée (19),
- une tige d'entrée (7) et une tige de sortie (9) couplées de part et d'autre du piston pneumatique (5), et
- un ressort de rappel (37) pour ramener le piston pneumatique (5) dans une position de repos, le ressort de rappel (37) étant disposé dans la chambre à basse pression (25) entre une surface interne (45) de l'enveloppe rigide et le piston pneumatique (5),
**caractérisé en ce que** le servomoteur pneumatique d'assistance au freinage (1) comporte en outre un capteur d'effort (39) disposé dans la chambre à basse pression (25) et soumis aux variations de charge du ressort de rappel (37).

2. Un servomoteur pneumatique d'assistance au freinage selon la revendication précédente, dans lequel le capteur d'effort (39) est positionné dans la chambre à basse pression (25) de façon à former une butée pour le ressort de rappel (37).

3. Un servomoteur pneumatique d'assistance au freinage selon la revendication 2, dans lequel le capteur d'effort (39) est positionné entre la surface interne (45) de l'enveloppe rigide (11) et le ressort de rappel (37).

4. Un servomoteur pneumatique d'assistance au freinage selon la revendication 2, dans lequel le capteur d'effort (39) est positionné entre le piston pneumatique (5) et le ressort de rappel (37).

5. Un servomoteur pneumatique d'assistance au freinage selon l'une des revendications précédentes, dans lequel un connecteur électrique (41) du capteur d'effort (39) est fixé de manière étanche à l'enveloppe rigide (11).

6. Un servomoteur pneumatique d'assistance au freinage selon la revendication précédente, dans lequel le connecteur électrique (41) du capteur d'effort (39) est monté serti à l'enveloppe rigide (11).

7. Un servomoteur pneumatique d'assistance au freinage selon la revendication 5 ou 6, dans lequel le capteur d'effort (39) est relié au connecteur électrique (41) du capteur d'effort (39) par un câble électrique (43) s'étendant dans la chambre à basse pression (25).

8. Un servomoteur pneumatique d'assistance au freinage selon l'une des revendications précédentes, dans lequel le capteur d'effort (39) est un capteur du type jauge de contrainte, ou un capteur à seuil.

## Claims

1. Pneumatic brake booster (1) comprising:
- a sealed structure (3) comprising a rigid casing (11) forming a funnel (19) furnished with an opening and a movable wall (13) dividing the sealed structure (3) into a low-pressure chamber (25) and a working chamber (27),
- a pneumatic piston (5) comprising a boss (31) fixedly attached to the movable wall (13) and mounted so as to slide in the funnel opening, a valve element (33) housed in the boss (31) and a seal (35) positioned between the boss (31) and the funnel (19),
- an input rod (7) and an output rod (9) coupled on either side of the pneumatic piston (5), and
- a return spring (37) to return the pneumatic piston (5) to a rest position, the return spring (37) being placed in the low-pressure chamber (25) between an internal surface (45) of the rigid casing and the pneumatic piston (5),
**characterized in that** the pneumatic brake booster (1) also comprises a force sensor (39) placed in the low-pressure chamber (25) and subjected to the pressure variations of the return spring (37).

2. Pneumatic brake booster according to the preceding claim, in which the force sensor (39) is positioned in the low-pressure chamber (25) so as to form a stop for the return spring (37).

3. Pneumatic brake booster according to Claim 2, in which the force sensor (39) is positioned between the internal surface (45) of the rigid casing (11) and the return spring (37).

4. Pneumatic brake booster according to Claim 2, in which the force sensor (39) is positioned between the pneumatic piston (5) and the return spring (37).

5. Pneumatic brake booster according to one of the preceding claims, in which an electric connector (41) of the force sensor (39) is attached in a sealed manner to the rigid casing (11).

6. Pneumatic brake booster according to the preceding claim, in which the electric connector (41) of the force sensor (39) is mounted swaged onto the rigid casing (11).

7. Pneumatic brake booster according to Claim 5 or 6, in which the force sensor (39) is connected to the electric connector (41) of the force sensor (39) via an electric cable (43) extending into the low-pressure chamber (25).

8. Pneumatic brake booster according to one of the preceding claims, in which the force sensor (39) is a sensor of the pressure gauge type, or a threshold sensor.

## Patentansprüche

1. Pneumatischer Servomotor (1) zur Bremsunterstützung, mit:
- einer dichten Struktur (3), die ein starres Gehäuse (11), das einen mit einer Öffnung versehenen Schacht (19) bildet, und eine bewegliche Wand (13) aufweist, die die dichte Struktur (3) in eine Niederdruckkammer (25) und eine Arbeitskammer (27) unterteilt,
- einem pneumatischen Kolben (5), der eine Nabe (31), die mit der beweglichen Wand (13) fest verbunden und gleitend in der Öffnung des Schachts angebracht ist, ein in der Nabe (31) angeordnetes Ventilelement (33) und eine zwischen der Nabe (31) und dem Schacht (19) angeordnete Dichtung (35) aufweist,
- einer Eingangsstange (7) und einer Ausgangsstange (9), die auf der einen und der anderen Seite des pneumatischen Kolbens (5) gekoppelt sind, und
- einer Rückstellfeder (37), um den pneumatischen Kolben (5) in eine Ruhestellung zurückzustellen, wobei die Rückstellfeder (37) in der Niederdruckkammer (25) zwischen einer Innenfläche (45) des starres Gehäuses und dem pneumatischen Kolben (5) angeordnet ist,
**dadurch gekennzeichnet, dass** der pneumatische Servomotor (1) zur Bremsunterstützung ferner einen Kraftsensor (39) aufweist, der in der Niederdruckkammer (25) angeordnet und den Laständerungen der Rückstellfeder (37) ausgesetzt ist.

2. Pneumatischer Servomotor zur Bremsunterstützung nach dem vorhergehenden Anspruch, bei dem der Kraftsensor (39) so in der Niederdruckkammer (25) angeordnet ist, dass er einen Anschlag für die Rückstellfeder (37) bildet.

3. Pneumatischer Servomotor zur Bremsunterstützung nach Anspruch 2, bei dem der Kraftsensor (39) zwischen der Innenfläche (45) des starren Gehäuses (11) und der Rückstellfeder (37) angeordnet ist.

4. Pneumatischer Servomotor zur Bremsunterstützung nach Anspruch 2, bei dem der Kraftsensor (39) zwischen dem pneumatischen Kolben (5) und der Rückstellfeder (37) angeordnet ist.

5. Pneumatischer Servomotor zur Bremsunterstützung nach einem der vorhergehenden Ansprüche, bei dem ein elektrischer Anschluss (41) des Kraftsensors (39) in dichter Weise am starren Gehäuse (11) befestigt ist.

6. Pneumatischer Servomotor zur Bremsunterstützung nach dem vorhergehenden Anspruch, bei dem der elektrische Anschluss (41) des Kraftsensors (39) durch Verstemmen am starren Gehäuse (11) angebracht ist.

7. Pneumatischer Servomotor zur Bremsunterstützung nach Anspruch 5 oder 6, bei dem der Kraftsensor (39) über ein sich in der Niederdruckkammer (25) erstreckendes elektrisches Kabel (43) mit dem elektrischen Anschluss (41) des Kraftsensors (39) verbunden ist.

8. Pneumatischer Servomotor zur Bremsunterstützung nach einem der vorhergehenden Ansprüche, bei dem der Kraftsensor (39) ein Sensor vom Typ Dehnungsmessstreifen oder Schwellensensor ist.
